# EUROPÄISCHE PATENTSCHRIFT

(11) **EP 2 192 282 B1**
(45) Veröffentlichungstag und Bekanntmachung des Hinweises auf die Patenterteilung: **14.10.2015**
(21) Anmeldenummer: 09013991.6
(22) Anmeldetag: 07.11.2009
(51) Int. Cl.: F01N 3/20

(54) **Verfahren zum Betreiben einer SCR-Katalysatoreinrichtung**
Method for operating an SCR catalytic converter
Procédé de fonctionnement d'un dispositif de catalyseur SCR

(30) Priorität: 01.12.2008 DE 102008059773
(43) Veröffentlichungstag der Anmeldung: 02.06.2010
(73) Patentinhaber: Volkswagen Aktiengesellschaft, 38440 Wolfsburg (DE)
(72) Erfinder: Horn, André, 19258 Boizenburg (DE); Wendenburg, Stefan, 38550 Isenbüttel (DE); Gottschling, Martina, 38106 Braunschweig (DE); Brömer, Arne, 38531 Rötgesbüttel (DE); Herr, Andreas, 38442 Fallersleben (DE); Resch, Stefan, 38444 Wolfsburg (DE)

(56) Entgegenhaltungen:
- WO-A1-2007/145548
- DE-A1- 10 301 606
- DE-A1-102005 042 488
- DE-A1-102006 009 935
- DE-A1-102006 041 135
- DE-A1-102006 043 152
- DE-A1-102007 022 594
- US-A1- 2004 128 982

## Beschreibung

Die Erfindung betrifft ein Verfahren zum Betreiben einer in einer Abgasanlage einer Verbrennungskraftmaschine angeordneten SCR-Katalysatoreinrichtung, welche zumindest einen SCR-Katalysator umfasst, der geeignet ist, ein chemisches Reduktionsmittel zumindest teilweise zu speichern und unter dessen Beteiligung Stickoxide eines in der Abgasanlage führbaren Abgases der Verbrennungskraftmaschine zu reduzieren, wobei das chemische Reduktionsmittel oder eine Vorstufe von diesem in das Abgas der Verbrennungskraftmaschine stromauf der SCR-Katalysatoreinrichtung zugeführt wird.

Mittels einer SCR-Katalysatoreinrichtung können beispielsweise bei einem mager betreibbaren Verbrennungsmotor, beispielsweise einem Dieselmotor, entstehende Stickoxide reduziert werden. Mittels eines SCR-Katalysators (SCR = selektive katalytische Reduktion) können Stickoxide in Anwesenheit des Reduktionsmittels zu N₂ und H₂O reduziert werden. Das Reduktionsmittel wird entweder direkt dem Abgas zugegeben oder es wird eine chemische Vorstufe des Reduktionsmittels zugegeben, die erst in der Abgasanlage das Reduktionsmittel freisetzt. Als Reduktionsmittel kann Ammoniak (NH₃) dienen, das dem Abgas als Gas oder als wässrige Lösung zugeführt werden kann. Es kann jedoch auch eine chemische Vorstufe, beispielsweise in Form von Harnstoff, dem Abgas zugeführt werden. Es ist bekannt, das Reduktionsmittel in Abhängigkeit von aktuellen NOₓ-Rohemissionen dem Abgas zuzugeben. Außerdem ist es bekannt, das Reduktionsmittel abhängig von einer Speicherfähigkeit bzw. einem Füllstand des SCR-Katalysators durchzuführen. Aus der EP 1 640 578 A1 ist ein Verfahren zum Betreiben einer Brennkraftmaschine, in deren Abgasbereich wenigstens ein Katalysator und stromabwärts des Katalysators ein NOₓ-Sensor angeordnet sind, bekannt. Der NOₓ-Sensor weist eine Querempfindlichkeit gegenüber einem Reagenzmittel auf, das im Katalysator benötigt wird. In vorgegebenen Betriebszuständen der Brennkraftmaschine wird ein Auswahlsignal bereitgestellt, bei dessen Auftreten das vom NOₓ-Sensor bereitgestellte Sensorsignal wenigstens als ein Maß für einen Reagenzmittelschlupf gewertet wird. Die DE 10 2005 042 487 A1 betrifft ein Verfahren zum Betreiben einer Brennkraftmaschine, in deren Abgasbereich wenigstens ein SCR-Katalysator angeordnet ist, der mit einem Reagenzmittel beaufschlagt wird, welches zur NOₓ-Konvertierung im SCR-Katalysator beiträgt. Der Reagenzmittel-Füllstand im SCR-Katalysator wird auf einen vorgegebenen Reagenzmittel-Sollfüllstand gesteuert oder geregelt, der mindestens auf einen Maximalwert festgelegt wird, der einem vollständig mit Reagenzmittel gefüllten SCR-Katalysator entspricht. Die DE 10 2005 042 489 A1 offenbart ein Verfahren zum Betreiben einer Brennkraftmaschine, in deren Abgasbereich wenigstens ein SCR-Katalysator angeordnet ist, der mit einem Reagenzmittel beaufschlagt wird, welches zur NOₓ-Konvertierung im SCR-Katalysator beiträgt. Ein Maß für den stromabwärts nach dem SCR-Katalysator auftretenden NOₓ-Strom wird sowohl berechnet als auch mit einem NOₓ-Sensor gemessen, der eine Querempfindlichkeit gegenüber dem Reagenzmittel aufweist. Ermittelt wird die Differenz zwischen. dem berechneten Maß und dem gemessenen Maß für den NOₓ-Strom, wobei ein Reagenzmittelsignal, welches die Dosierung des Reagenzmittels festlegt, in Abhängigkeit von der Differenz beeinflusst wird. Die DE 10 2005 042 490 A1 schlägt ein Verfahren zum Betreiben einer Brennkraftmaschine, in deren Abgasbereich wenigstens ein SCR-Katalysator angeordnet ist, der mit einem Reagenzmittel beaufschlagt wird, welches zur NOₓ-Konvertierung im SCR-Katalysator beiträgt, vor. Ein NOₓ-Sensor, der stromabwärts nach dem SCR-Katalysator angeordnet ist, stellt ein Abgassensorsignal bereit, das der Summe der NOₓ-Konzentration und einem Reagenzmittelschlupf entspricht. Die DE 10 2005 062 120 A1 betrifft ein Verfahren zur Überwachung eines Abgasnachbehandlungssystems einer Brennkraftmaschine mit einem Motorblock und einer Abgasführung, die mindestens einen Katalysator aufweist, bei dem stromaufwärts des Katalysators ein im Katalysator zur NOₓ-Reduktion benötigtes Reagenzmittel mittels einer Einbringvorrichtung eingebracht wird, wobei in definierten Referenzbetriebspunkten die Reduktionsmittelrate so weit erhöht wird, bis mittels eines ammoniaksensitiven Sensors in der Abgasführung in Strömungsrichtung hinter dem Katalysator ein Ammoniakdurchbruch detektiert wird.

DE 10 2006 043 152 A1 beschreibt ein Verfahren zur Steuerung einer ReduktionsmittelDosierung für einen SCR-Katalysator, bei dem ein Füllstand des Katalysators so eingestellt wird, dass eine Mindestmenge an gespeichertem Reduktionmittel vorliegt, um auch im instationären Betrieb der Brennkraftmaschine auftretende NO_{X}-Spitzen umzusetzen. Der Füllstand wird mit einem Katalysatormodell modelliert, das als Eingangsgrößen neben dem in den Katalysator einströmenden Reduktionsmittelstrom die Katalysatortemperatur, den einströmenden NO_{X}-Massenstrom, den ausströmenden NO_{X}-Massenstrom, den Reduktionsmittelschlupf sowie den berechneten Wirkungsgrad des Katalysators auswertet. DE 103.01 606 As beschreibt eine weitere Methode, um eine Reduktionsmitteldosierung in einem SCR-System zu steuern. Dabei wird aus einer Betriebskenngröße, umfassend die Abgastemperatur vor und/oder hinter dem SCR-Katalysator, die Stickoxid-, Sauerstoff- und/oder Ammoniakkonzentration im Abgas und/oder die Abgasmenge, zumindest eine Modell-/Beobachtergröße mittels eines Rechenmodells bestimmt, in deren Abhängigkeit die Dosierung erfolgt. Die Modell-/Beobachtergröße umfasst einen Reduktionsmittelspeichergrad des Katalysators, eine Reduktionsmittelspeichermenge, einen Wirkungsgrad, ein Abgastemperaturprofil und/oder einen Abgasmassenstrom.

Aufgabe der Erfindung ist es, ein Verfahren zum Betreiben einer in einer Abgasanlage einer Verbrennungskraftmaschine angeordneten Katalysatoreinrichtung anzugeben, wobei ein füllstandsabhängiges NOₓ-Reduktionspotenzial optimal ausgenutzt und gleichzeitig ein Reduktionsmittelschlupf möglichst vermieden werden kann.

Die Aufgabe ist mit den Merkmalen der unabhängigen Ansprüche gelöst. Vorteilhafte Ausführungsformen sind in den Unteransprüchen dargestellt.

Die Aufgabe ist bei einem Verfahren zum Betreiben einer in einer Abgasanlage einer Verbrennungskraftmaschine angeordneten SCR-Katalysatoreinrichtung, welche zumindest einen SCR-Katalysator umfasst, der geeignet ist, ein chemisches Reduktionsmittel zumindest teilweise zu speichern und unter dessen Beteiligung Stickoxide eines in der Abgasanlage führbaren Abgases der Verbrennungskraftmaschine zu reduzieren, wobei dem Abgas der Verbrennungskraftmaschine stromauf der SCR-Katalysatoreinrichtung eine Menge des chemischen Reduktionsmittels oder einer Vorstufe von diesem zugeführt wird, dadurch gelöst, dass die Zufuhr des Reduktionsmittels oder seiner Vorstufe mit einer aktiven Veränderung der zugeführten Menge erfolgt, ein Filterverhalten des SCR-Katalysators durch Auswerten einer Veränderung eines Antwortsignals eines stromab des SCR-Katalysators angeordneten NOX-Sensors in Antwort auf die aktive Veränderung bewertet wird, wobei für die Auswertung des Antwortsignals des NOX-Sensors ein Amplitudenverhältnis, eine Totzeit, eine Laufzeit und/oder ein Anstieg des Antwortsignals verwendet werden, und eine Bemessungsgröße für eine in dem SCR-Katalysator gespeicherte NH3-Menge in Abhängigkeit von einem dem Filterverhalten des SCR-Katalysators ermittelt wird. Vorteilhaft kann eine Einschätzung des aktuellen NH₃-Füllstandes vorgenommen werden, ohne dabei auf einen Zustand eines maximalen NH₃-Füllstandes als Basis angewiesen sein. Vorteilhaft kann so ein maximaler NOₓ-Umsatz bei einer gleichzeitig minimalen NH₃-Schlupfgefahr erzielt werden. Ferner ist vorteilhaft kein NH₃-Sensor und/oder ein zumindest auf NH₃ empfindlicher NOₓ-Sensor bzw. eine softwaretechnische Auswertung einer solchen Querempfindlichkeit notwendig. Vorteilhaft kann je nach Auslegung das Verfahren mit nur dem einen dem SCR-Katalysator nachgeschalteten NOₓ-Sensor durchgeführt werden.

Erfindungsgemäß ist vorgesehen, dass das Reduktionsmittel mit einer aktiven Veränderung der zugeführten Menge und das Filterverhalten des SCR-Katalysators mit Hilfe der aktiven Veränderung bestimmt werden. Unter aktiver Veränderung kann eine beliebige Verlaufsänderung der Zugabe des Reduktionsmittels, beispielsweise ein Sprung, eine Sinusfunktion, eine Nadelfunktion und/oder Ähnliches verstanden werden. Der Veränderung entspricht eine Änderung in der NH₃-Konzentration mit der der SCR-Katalysator beaufschlagt wird oder einer Änderung eines Ansteuersignals einer Zugabeeinrichtung für das Reduktionsmittel. Das Filterverhalten des SCR-Katalysators bedingt eine bestimmte Antwort auf die aktive Veränderung. Diese Antwort wird zur Ermittlung der Bemessungsgröße bewertet bzw. ausgewertet.

Bei einer weiteren Ausführungsform des Verfahrens ist vorgesehen, dass die aktive Veränderung über ein Feed-Verhältnis aus einer eingedüsten NH₃-Menge, dividiert durch eine aktuelle NOₓ-Rohemission, erfolgt. Ein Feed-Verhältnis von 1 würde einer stöchiometrischen Mischung von NH₃ zu NOₓ entsprechen. Das Feed-Verhältnis eignet sich gut als Grundlage zum Ermitteln der Antwort bzw. des Filterverhaltens des SCR-Katalysators. Ferner kann das Feed-Verhältnis zur Regelung und/oder Steuerung der Reduktionsmittelzugabe in einem entsprechenden Steuergeräts ohnehin vorliegen und ist entsprechend steuer- bzw. regelbar.

Bei einer weiteren Ausführungsform des Verfahrens ist vorgesehen, dass die aktive Veränderung in Form eines Sprungs, einer Sinusschwingung und/oder eines Peaks erfolgt. Sprungfunktionen, Sinusfunktionen und/oder Peaks sind gut geeignet, eine Antwort bzw. ein Filterverhalten zu ermitteln.

Erfindungsgemäß ist vorgesehen, dass für die Bewertung des Filterverhaltens auf die aktive Veränderung das Antwortsignal eines stromabwärts vom SCR-Katalysator angeordneten ersten NOₓ-Sensors ausgewertet wird. Somit kann mittels eines auf NOₓ sensitiven Sensors über die Bewertung des Filterverhaltens auf die Bemessungsgröße zurückgeschlossen werden. Eine Messung in der Größe NH₃ ist vorteilhaft nicht notwendig.

Erfindungsgemäß ist vorgesehen, dass für die Bewertung des Antwortsignals ein Amplitudenverhältnis, eine Totzeit, eine Laufzeit und/oder ein Anstieg des Antwortsignals verwendet werden. Mittels dieser Größen, insbesondere sofern weitere Parameter, wie beispielsweise eine Temperatur des SCR-Katalysators und/oder ein Betriebszustand der Verbrennungskraftmaschine, bekannt sind, kann ein guter Rückschluss auf das Filterverhalten ' gezogen werden.

Bei einer weiteren Ausführungsform des Verfahrens ist vorgesehen, dass eine Art der aktiven Veränderung in Abhängigkeit von aktuellen Abgasbedingungen und/oder einer Last der Verbrennungskraftmaschine durchgeführt wird. Vorteilhaft führen bei verschiedenen Abgasbedingungen, beispielsweise einer Temperatur und/oder einer Raumgeschwindigkeit, bestimmte aktive Veränderungen zu einer besonders leicht interpretierbaren Antwort.

Bei einer weiteren Ausführungsform des Verfahrens ist vorgesehen, dass eine Analyse des Filterverhaltens bei einer konstanten Last der Verbrennungskraftmaschine erfolgt. Vorteilhaft müssen mittels einer Änderung der Last der Verbrennungskraftmaschine hervorgerufene Veränderungen der Antwort des SCR-Katalysators nicht berücksichtigt bzw. herausgerechnet werden. Die Antwort des SCR-Katalysators kann besonders einfach und treffsicher bewertet und in die Bemessungsgröße übergeführt werden.

Bei einer weiteren Ausführungsform des Verfahrens ist vorgesehen, dass das Filterverhalten nur in einem definierten Abgastemperaturbereich zur Bestimmung der Bemessungsgröße genutzt wird. Vorteilhaft kann der aktuelle NH₃-Füllstand in dem definierten Abgastemperaturbereich exakt ermittelt werden. Möglicherweise außerhalb des definierten Abgastemperaturbereichs auftretende Ungenauigkeiten können ausgeschlossen werden.

Bei einer weiteren Ausführungsform des Verfahrens ist vorgesehen, dass außerhalb eines Abgastemperaturbereichs eine füllstandsorientierte Reduktionsmittelzugabe mittels anderer Steuerungs- und/oder Regelansätze angewendet wird. Vorteilhaft ist es möglich, außerhalb des Abgastemperaturbereichs trotz möglicherweise auftretender Ungenauigkeiten eine möglichst exakte Vorhersage bzw. Ermittlung des NH₃-Füllstandes zu gewährleisten.

Bei einer weiteren Ausführungsform des Verfahrens ist vorgesehen, dass außerhalb des Abgastemperaturbereichs eine emissionsorientierte Reduktionsmittelzugabe ohne Berücksichtigung der Bemessungsgröße erfolgt. Vorteilhaft ist es möglich, auch außerhalb des Abgastemperaturbereichs eine sinnvolle Steuerung und/oder Regelung der Reduktionsmittelzugabe vorzunehmen.

Die Aufgabe ist außerdem mit einem KFZ, eingerichtet, ausgelegt und/oder konstruiert zum Durchführen eines vorab beschriebenen Verfahrens gelöst. Es ergeben sich die vorab beschriebenen Vorteile.

Weitere Vorteile, Merkmale und Einzelheiten ergeben sich aus der nachfolgenden Beschreibung, in der unter Bezug auf die Zeichnung ein Ausführungsbeispiel im Einzelnen beschrieben ist. Gleiche, ähnliche und/oder funktionsgleiche Teile sind mit gleichen Bezugszeichen versehen. Es zeigen:
- Figur 1: Eine in einer Abgasanlage einer Verbrennungskraftmaschine angeordnete SCR-Katalysatoreinrichtung;
- Figur 2: ein Schaubild einer aktiven Veränderung einer Reduktionsmittelzugabe der in Figur 1 dargestellten SCR-Katalysatoreinrichtung;
- Figur 3: ein Schaubild einer Antwort eines SCR-Katalysators der in Figur 1 dargestellten SCR-Katalysatoreinrichtung auf die in Figur 2 gezeigte aktive Veränderung;
- Figur 4: ein Schaubild einer weiteren aktiven Veränderung;
- Figur 5: ein Schaubild einer weiteren aktiven Veränderung;
- Figur 6: ein Schaubild einer aktiven Veränderung und einer entsprechenden Antwort darauf, wobei der SCR-Katalysator einen Füllstand nahe eines minimalen Füllstandes aufweist und
- Figur 7: ein Schaubild einer aktiven Veränderung der Reduktionsmittelzufuhr und einer entsprechenden Antwort darauf, wobei der SCR-Katalysator einen Füllstand aufweist, der in etwa 50 % eines maximalen Füllstandes beträgt.

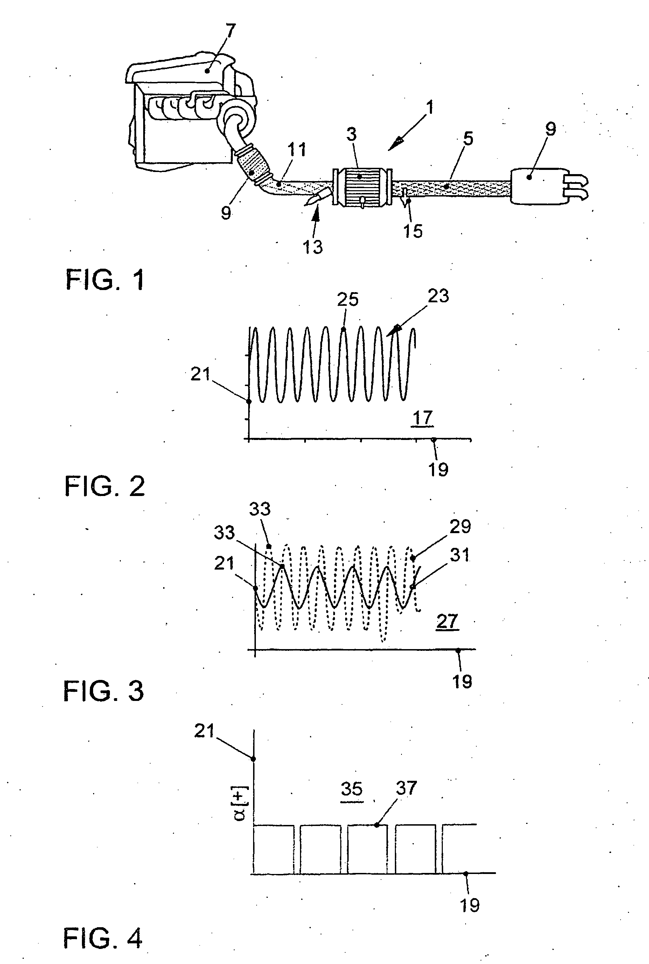

Figur 1. zeigt eine SCR-Katalysatoreinrichtung 1 mit einem SCR-Katalysator 3. Die SCR-Katalysatoreinrichtung 1 ist in einer Abgasanlage 5 einer Verbrennungskraftmaschine 7 nachgeschaltet angeordnet. Die Abgasanlage 5 kann dem SCR-Katalysator 3 vorgeschaltet und/oder nachgeschaltet weitere Komponenten 9 zur Behandlung eines Abgases 11 der Verbrennungskraftmaschine 7 aufweisen. Bei den Komponenten 9 kann es sich beispielsweise um einen Oxidationskatalysator, einen Dieselpartikelfilter, einen Speicher-Katalysator, einen Schalldämpfer, ein Ammoniak-Sperrkatalysator und/oder weitere Komponenten handeln. Die SCR-Katalysatoreinrichtung 1 weist eine dem SCR-Katalysator 3 vorgeschaltete, in Figur 1 nur teilweise dargestellte Dosiereinrichtung 13 zum Eindosieren eines Reduktionsmittels in das Abgas 11 auf. Bei dem Reduktionsmittel kann es sich beispielsweise um Ammoniak (NH₃) handeln. Es ist jedoch auch denkbar, dass es sich bei dem eindosierten Reduktionsmittel um eine Vorstufe, beispielsweise um Harnstoffe, insbesondere um eine wässrige Harnstofflösung handelt, wobei das eigentliche an der Reduktion von in dem Abgas 11 enthaltenen Stickoxiden beteiligte Ammoniak erst in Anwesenheit des Abgases 11 entsteht. Hierzu kann der SCR-Katalysator 3 eine entsprechende katalytische Vorstufe aufweisen.

Zur Messung einer NOₓ-Konzentration des mittels des SCR-Katalysators gereinigten Abgases 11 ist dem SCR-Katalysator 3 ein erster NO_{X}-Sensor 15 nachgeschaltet.

Figur 2 zeigt ein erstes Schaubild 17. Das erste Schaubild 17 weist eine X-Achse 19 auf, auf der eine Zeit aufgetragen ist. Auf einer Y-Achse 21 des ersten Schaubildes 17 ist eine NH₃-Konzentration des Abgases 11 aufgetragen, wie sie mittels der Dosiereinrichtung 13 erzeugbar ist. Über der X-Achse 19 erfährt die NH₃-Konzentration eine aktive Veränderung 23 in Form einer Sinusschwingung 25.

Figur 3 zeigt ein zweites Schaubild 27 mit einer X-Achse 19, auf der die Zeit aufgetragen ist und einer Y-Achse 21, auf der ein Ausgangssignal des ersten NO_{X}-Sensors 15 aufgetragen ist. Das Ausgangssignal des ersten NO_{X}-Sensors 15 ist als Antwort auf die in Figur 2 dargestellte aktive Veränderung 23 für verschiedene NH₃-Füllstände des SCR-Katalysators 3 eingezeichnet. Ein erster, gepunktet dargestellter Graf 29 stellt ein Antwortsignal für einen NH₃-Füllstand des SCR-Katalysators 3 von ungefähr 0 % dar. Ein zweiter Graf 31, der durchgezogen dargestellt ist, stellt eine Antwort auf die aktive Veränderung 23 bei einem NH₃-Füllstand des SCR-Katalysators 3 von ungefähr 50 % dar. Es ist zu erkennen, dass die Grafen 29 und 31 unterschiedliche Amplituden 33 aufweisen. Ferner, was in Figur 3 nicht exakt zu erkennen ist, können sich unterschiedliche Verzögerungszeiten bzw. Phasenverschiebungen als Antwort auf die Sinusschwingung 25 der aktiven Veränderung 23, wie in Figur 2 dargestellt, ergeben. Vorteilhaft können die Phasenverschiebung und/oder die unterschiedlichen Amplituden 33 als ein Maß für eine den NH₃-Füllstand des SCR-Katalysators 3 kennzeichnende Bemessungsgröße dienen.

Figur 4 zeigt ein drittes Schaubild 35 analog des in Figur 2 dargestellten ersten Schaubildes 17. Im Unterschied ist auf der Y-Achse 21 nicht die NH₃-Konzentration, sondern ein Feed-Verhältnis Alpha aufgetragen. Ein Feed-Verhältnis Alpha = 1 kann dabei einer stöchometrischen Mischung von in dem Abgas 11 enthalten NO_{X} und zudosierten NH₃ entsprechen. Es ist zu erkennen, dass die aktive Veränderung 23, wie in Figur 4 dargestellt, einen Rechteckverlauf 37 aufweist.

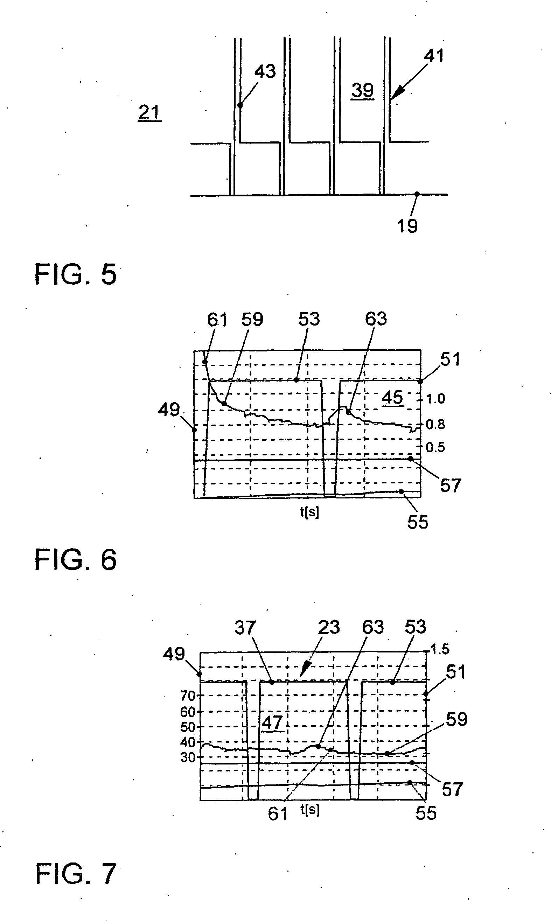

Figur 5 zeigt ein viertes Schaubild 39 analog dem in Figur 4 dargestellten dritten Schaubild, wobei die aktiv Veränderung 23 einen H-Verlauf 41 aufweist. Der H-Verlauf 41 weist im Grundsatz den in Figur 4 dargestellten Rechteckverlauf 37 auf, wobei im Unterschied jeweils ansteigende Flanken von Rechtecken des Rechteckverlaufs 37 einen Nadelverlauf 43 bzw. ein Peak aufweisen.

Figur 6 zeigt ein fünftes Schaubild 45 und Figur 7 ein sechstes Schaubild 47. Die Schaubilder 45 und 47 weisen ebenfalls eine X-Achse auf, auf der die Zeit aufgetragen ist. Auf einer ersten, links dargestellten Y-Achse 49 ist jeweils das Ausgangssignal. des ersten NO_{X}-Sensors 15 in ppm dargestellt, beispielsweise zwischen 0 und 100 ppm. Auf einer zweiten Y-Achse 51 sind unterschiedliche Größen, beispielsweise ein Füllstand des SCR-Katalysators 3 in Gramm (m_{NH3}) sowie das Feed-Verhältnis Alpha.

In den Figuren 6 und 7 stellt jeweils ein dritter Graf 53 eine aktiv Veränderung 23 dar, die quasi einen Rechteckverlauf 37 analog der Darstellung gemäß Figur 4 aufweist. Ein vierter Graf 55 zeigt einen NH₃-Füllstand des SCR-Katalysators 3 über der Zeit. Ein fünfter Graf 57 indiziert einen maximalen NH₃-Füllstand von 100 Prozent des SCR-Katalysators 3. Ein sechster Graf 59 zeigt jeweils eine Antwort 63 bzw. ein Filterverhalten 61 des SCR-Katalysators 3 auf die aktive Veränderung 23.

Wie in den Figuren 6 und 7 zu erkennen, weist das Filterverhalten 61 die Antwort 63 auf die aktive Veränderung 23 auf. In Figur 6 erfolgt die Antwort 63 jedoch deutlich früher und stärke als in Figur 7. Aus dieser zeitlichen Verzögerung und/oder Verstärkung der Antwort 63 kann vorteilhaft auf die den NH₃-Füllstand des SCR-Katalysators 3 repräsentierende Bemessungsgröße geschlossen werden. In Figur 6 weist der mittels des vierten Grafen 55 dargestellte NH₃-Füllstand des SCR-Katalysators 3 einen Wert von ungefähr 0 auf. In Figur 7 weist der NH₃-Füllstand des SCR-Katalysators 3 ungefähr einen Wert von 50 % auf.

Vorteilhaft wird im Vergleich zum Stand der Technik der aktuelle NH₃-Füllstand im SCR-Katalysator 3 mittels einer füllstandsabhängigen Katalysatoreigenschaft bzw. des Filterverhaltens 61 des SCR-Katalysators 3 bewertet. Vorteilhaft kann diese Eigenschaft des SCR-Katalysators 3 ausgenützt werden, um Störungen, Unterbrechungen und/oder Schwankungen der Reduktionsmittelzugabe der Dosiereinrichtung 13, je nach NH₃-Füllstand des SCR-Katalysators 3 unterschiedlich zu filtern. Dieses Filterverhalten 61 kann über den stromabwärts des SCR-Katalysators 3 angeordneten ersten NOₓ-Sensor 15 bewertet werden (vgl. Fig. 1 - 3). Bevorzugt wird hierzu die Reduktionsmittelzugabe aktiv verändert bzw. weist die aktive Veränderung 23 auf, beispielsweise in Form eines sogenannten NH₃-Wobbelns.

Die Figuren 4 und 5 zeigen beispielhaft weitere aktive Veränderungen 23 der Reduktionsmittelzufuhr. Als charakteristische Größe für ein solches NH₃-Wobben kann das Feed-Verhältnis Alpha verwendet werden.

Die Figuren 6 und 7 verdeutlichen eine praktische Messung für das beschriebene Filterverhalten 61 des SCR-Katalysators 3, wobei unterschiedliche NH₃-Füllstände mittels des vierten Grafens 55 veranschaulicht sind. Es wird deutlich, dass sich für einen vernachlässigbaren NH₃-Füllstand, wie in Figur 6 dargestellte, (m_{NH3 eingespeichert}/m_{NH3} max ungefähr 0) und für einen mittleren NH₃-Füllstand (m_{NH3} eingespeichert/m_{NH3 max} ungefähr gleich 0,5) in dem SCR-Katalysator 3 die Antwort 63 des ersten NO_{X}-Sensors 15 auf die aktive Veränderung 23 der Reduktionsmittelzugabe bezüglich Totzeit, Laufzeit, Amplitude und/oder Signalanstieg unterscheidet. Als wesentliche Vorteile ist eine bessere Einschätzung des aktuellen NH₃-Füllstandes möglich, ohne dabei auf einen Zustand maximaler NH₃-Füllstand als Basis für eine Füllstandsregelung angewiesen zu sein, ein hoher NOₓ-Umsatz bei gleichzeitig niedriger NH₂-Schlupfgefahr möglich. Außerdem ist vorteilhaft kein separater NH₃-Sensor notwendig. Schließlich kann bei Verwendung eines NO_{X}-Rohemissionsmodells der Verbrennungskraftmaschine 7 auf einen weiteren, dem SCR-Katalysator 3 vorgeschalteten NO_{X}-Sensor verzichtet werden.

### Bezugszeichenliste

- 1: SCR-Katalysatoreinheit
- 3: SCR-Katalysator
- 5: Abgasanlage
- 7: Verbrennungskraftmaschine
- 9: Komponenten
- 11: Abgas
- 13: Dosiereinrichtung
- 15: erster NOX-Sensor
- 17: erstes Schaubild
- 19: X-Achse
- 21: Y-Achse
- 23: aktive Veränderung
- 25: Sinusschwingung
- 27: zweites Schaubild
- 29: erster Graf
- 31: zweiter Graf
- 33: Amplitude
- 35: drittes Schaubild
- 37: Rechteckverlauf
- 39: viertes Schaubild
- 41: H-Verlauf
- 43: Nadelverlauf
- 45: fünftes Schaubild
- 47: sechstes Schaubild
- 49: erste Y-Achse
- 51: zweite Y-Achse
- 53: dritter Graf
- 55: vierter Graf
- 57: fünfter Graf
- 59: sechster Graf
- 61: Filterverhalten
- 63: Antwort
- 65: weiterer SCR-Katalysator
- 67: zweiter NOx-Sensor
- 69: dritter NOx-Sensor
- 71: siebtes Schaubild
- 73: Kraftfahrzeug
- 75: achtes Schaubild
- 77: siebter Graf
- 79: achter Graf
- 81: neunter Graf
- 83: zehnter Graf
- 85: elfter Graf
- 87: erste Stickoxidkonzentration
- 89: zweite Stichoxidkonzentration
- 91: Ammoniakkonzentration
- 93: Geschwindigkeitsprofil
- 95: relative Umsatzdifferenz
- 97: Ellipse

## Patentansprüche

1. Verfahren zum Betreiben einer in einer Abgasanlage (5) einer Verbrennungskraftmaschine (7) angeordneten SCR-Katalysatoreinrichtung (1), welche zumindest einen SCR-Katalysator (3) umfasst, der geeignet ist, ein chemisches Reduktionsmittel zumindest teilweise zu speichern und unter dessen Beteiligung Stickoxide eines in der Abgasanlage geführten Abgases (11) der Verbrennungskraftmaschine (7) zu reduzieren, wobei dem Abgas (11) der Verbrennungskraftmaschine (7) stromauf des SCR-Katalysators (3) eine Menge des chemischen Reduktionsmittels oder einer Vorstufe von diesem zugeführt wird, wobei
- die Zufuhr des Reduktionsmittels oder seiner Vorstufe mit einer aktiven Veränderung (23) der zugeführten Menge erfolgt,
- ein Filterverhalten (61) des SCR-Katalysators (3) durch Auswerten einer Veränderung eines Antwortsignals eines stromab des SCR-Katalysators (3) angeordneten NO_{X}-Sensors (15) in Antwort auf die aktive Veränderung (23) bewertet wird, wobei für die Auswertung des Antwortsignals (63) des NO_{X}-Sensors (15) ein Amplitudenverhältnis, eine Totzeit, eine Laufzeit und/oder ein Anstieg des Antwortsignals (63) verwendet werden, und
- eine Bemessungsgröße für eine in dem SCR-Katalysator (3) gespeicherte NH₃-Menge in Abhängigkeit von dem Filterverhalten (61) des SCR-Katalysators (3) ermittelt wird.

2. Verfahren nach Anspruch 1, **dadurch gekennzeichnet, dass** die aktive Veränderung (23) der zugeführten Menge über ein Feed-Verhältnis aus eingedüster NH₃-Menge dividiert durch eine aktuelle NO_{X}-Rohemission erfolgt.

3. Verfahren nach einem der vorhergehenden Ansprüche 1 oder 2, **dadurch gekennzeichnet, dass** die aktive Veränderung (23) in Form eines Sprungs, einer Sinusschwingung (25) und/oder eines Nadelverlaufs (43) erfolgt.

4. Verfahren nach einem der vorhergehenden Ansprüche, **dadurch gekennzeichnet, dass** eine Art der aktiven Veränderung (23) in Abhängigkeit von aktuellen Abgasbedingungen und/oder einer Last der Verbrennungskraftmaschine (7) gewählt oder durchgeführt wird.

5. Verfahren nach einem der vorhergehenden Ansprüche, **dadurch gekennzeichnet, dass** die Bewertung des Filterverhaltens (61) bei einer konstanten Last der Verbrennungskraftmaschine (7) erfolgt.

6. Verfahren nach einem der vorhergehenden Ansprüche, **dadurch gekennzeichnet, dass** das Filterverhalten (61) nur in einem definierten Abgastemperatürbereich zur Bestimmung der Bemessungsgröße genutzt wird.

7. Verfahren nach Anspruch 6, **dadurch gekennzeichnet, dass** außerhalb eines Abgastemperaturbereichs eine füllstandsorientierte Reduktionsmittelzugabe mittels anderer Steuerungs- und/oder Regelansätze angewendet wird.

8. Verfahren nach Anspruch 6 oder 7, **dadurch gekennzeichnet, dass** außerhalb des Abgastemperaturbereichs eine emissionsorientierte Reduktionsmittelzugabe ohne Berücksichtigung der Bemessungsgröße erfolgt.

9. Kraftfahrzeug mit einer Verbrennungskraftmaschine (7) und einer dieser nachgeschalteten Abgasanlage (5) mit einer SCR-Katalysatoreinrichtung (1), eingerichtet, konstruiert und/oder ausgelegt zum Durchführen eines Verfahrens nach einem der vorhergehenden Ansprüche.

## Claims

1. Method for operating an SCR catalytic converter device (1) which is arranged in an exhaust system (5) of an internal combustion engine (7) and comprises at least one SCR catalytic converter (3) which is suitable for at least partially storing a chemical reducing agent, and, with the involvement thereof, reducing nitrogen oxides of an exhaust gas (11), conducted in the exhaust system, of the internal combustion engine (7), wherein a quantity of the chemical reducing agent or a precursor thereof is fed into the exhaust gas (11) of the internal combustion engine (7) upstream of the SCR catalytic converter (3), wherein
- the feeding of the reducing agent or of the precursor thereof is carried out with an active change (23) in the quantity which is fed in,
- a filter behaviour (61) of the SCR catalytic converter (3) is assessed by evaluating a change in a response signal of an NO_{X} sensor (15), arranged downstream of the SCR catalytic converter (3), in response to the active change (23), wherein an amplitude ratio, a lag time, a transit time and/or a rise in the response signal (63) are used for the evaluation of the response signal (63) of the NO_{X} sensor (15), and
- a dimensioning variable for a quantity of NH₃ stored in the SCR catalytic converter (3) is determined as a function of the filter behaviour (61) of the SCR catalytic converter (3).

2. Method according to Claim 1, **characterized in that** the active change (23) in the quantity fed in is carried out by means of a feed ratio composed of an injected quantity of NH₃ divided by a current NO_{X} raw emission.

3. Method according to one of the preceding Claims 1 and 2, **characterized in that** the active change (23) takes place in the form of a jump, a sinusoidal oscillation (25) and/or a needle profile, (43).

4. Method according to one of the preceding claims, **characterized in that** a type of the active change (23) is selected or carried out as a function of current exhaust gas conditions and/or a load of the internal combustion engine (7).

5. Method according to one of the preceding claims, **characterized in that** the assessment of the filter behaviour (61) is carried out at a constant load of the internal combustion engine (7).

6. Method according to one of the preceding claims, **characterized in that** the filter behaviour (61) is used only in a defined exhaust gas temperature range to determine the dimensioning variable.

7. Method according to Claim 6, **characterized in that** outside an exhaust gas temperature range a filling-level-oriented addition of reducing agent is applied by means of other open-loop and/or closed-loop control approaches.

8. Method according to Claim 6 or 7, **characterized in that** outside the exhaust gas temperature range an emission-oriented addition of reducing agent is carried out without taking into account the dimensioning variable.

9. Motor vehicle having an internal combustion engine (7) and an exhaust system (5) which is arranged downstream thereof and has an SCR catalytic converter device (1) which is configured, designed and/or embodied so as to carry out a method according to one of the preceding claims.

## Revendications

1. Procédé de fonctionnement d'un dispositif de catalyseur SCR (1) disposé dans une installation de gaz d'échappement (5) d'un moteur à combustion interne (7), qui comprend au moins un catalyseur SCR (3), qui est apte à accumuler au moins partiellement un agent réducteur chimique et à réduire par la participation de celui-ci les oxydes d'azote de gaz d'échappement (11) du moteur à combustion interne (7) conduit dans l'installation de gaz d'échappement, dans lequel on ajoute au gaz d'échappement (11) du moteur à combustion interne (7), en amont du catalyseur SCR (3), une quantité de l'agent réducteur chimique ou d'un précurseur de celui-ci, dans lequel
- l'ajout de l'agent réducteur ou de son précurseur est effectué avec un changement actif (23) de la quantité ajoutée,
- on évalue un comportement de filtre (61) du catalyseur SCR (3) par interprétation d'une variation d'un signal de réponse d'un capteur de NOₓ (15) disposé en aval du catalyseur SCR (3) quant au changement actif (23), dans lequel on utilise pour l'interprétation du signal de réponse (63) du capteur de NOₓ (15) un rapport d'amplitude, un temps mort, un temps de marche et/ou une hausse du signal de réponse (63), et
- on détermine une grandeur de dimensionnement pour une quantité de NH₃ accumulée dans le catalyseur SCR (3) en fonction du comportement de filtre (61) du catalyseur SCR (3).

2. Procédé selon la revendication 1, **caractérisé en ce que** l'on effectue le changement actif (23) de la quantité ajoutée par un rapport d'alimentation de la quantité de NH₃ injectée divisée par une émission brute de NOₓ actuelle.

3. Procédé selon l'une quelconque des revendications 1 ou 2, **caractérisé en ce que** l'on effectue le changement actif (23) sous la forme d'un saut, d'une oscillation sinusoïdale (25) et/ou d'une allure en aiguille (43).

4. Procédé selon l'une quelconque des revendications précédentes, **caractérisé en ce que** l'on choisit ou on effectue un type de changement actif (23) en fonction de conditions actuelles du gaz d'échappement et/ou d'une charge du moteur à combustion interne (7).

5. Procédé selon l'une quelconque des revendications précédentes, **caractérisé en ce que** l'on effectue l'évaluation du comportement de filtre (61) sous une charge constante du moteur à combustion interne (7).

6. Procédé selon l'une quelconque des revendications précédentes, **caractérisé en ce que** l'on n'utilise le comportement de filtre (61) que dans une plage définie de température du gaz d'échappement pour la détermination de la grandeur de dimensionnement.

7. Procédé selon la revendication 6, **caractérisé en ce que**, en dehors d'une plage de température du gaz d'échappement, on applique une addition d'agent réducteur selon l'état de remplissage au moyen d'autres opérations de commande et/ou de régulation.

8. Procédé selon la revendication 6 ou 7, **caractérisé en ce que**, en dehors de la plage de température du gaz d'échappement, on effectue une addition d'agent réducteur selon les émissions sans tenir compte de la grandeur de dimensionnement.

9. Véhicule automobile avec un moteur à combustion interne (7) et une installation de gaz d'échappement (5) disposée en aval de celui-ci avec un dispositif de catalyseur SCR (1), construit ou conçu pour la mise en oeuvre d'un procédé selon l'une quelconque des revendications précédentes.
